(19) Europäisches Patentamt
European Patent Office
Office européen des brevets

(11) **EP 4 778 896 A1**

(12) **EUROPEAN PATENT APPLICATION**
published in accordance with Art. 153(4) EPC

(43) Date of publication:
**22.07.2026  Bulletin 2026/30**

(21) Application number: **24865646.4**

(22) Date of filing: **09.07.2024**

(51) International Patent Classification (IPC):
*C03C 3/083* (2006.01)    *C03C 3/091* (2006.01)
*C03C 3/093* (2006.01)    *C03C 21/00* (2006.01)

(52) Cooperative Patent Classification (CPC):
**C03C 3/083; C03C 3/091; C03C 3/093; C03C 21/00**

(86) International application number:
**PCT/KR2024/009735**

(87) International publication number:
**WO 2025/058203 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023  KR 20230121754**

(71) Applicant: **KCC GLASS Corporation
Seoul 06526 (KR)**

(72) Inventors:
 • **KWON, Oh Hyeok
  Gyeongsan-si, Gyeongsangbuk-do 38688 (KR)**

 • **JANG, Yong Soo
  Yeoju-si, Gyeonggi-do 12652 (KR)**
 • **KIM, Sung Jin
  Daegu 42042 (KR)**
 • **LEE, Gyu Jin
  Hongcheon-gun, Gangwon-do 25130 (KR)**
 • **SHIN, So Young
  Busan 48076 (KR)**
 • **KIM, Jin Yong
  Seoul 06331 (KR)**

(74) Representative: **Pfenning, Meinig & Partner mbB
Patent- und Rechtsanwälte
Theresienhöhe 11a
80339 München (DE)**

(54) **GLASS ARTICLE**

(57)   The present invention provides ultra-thin glass having excellent mechanical strength. In particular, the present invention provides ultra-thin glass having excellent mechanical strength by controlling compressive stress according to the glass composition.

**Description**

[Technical Field]

The present invention relates to ultra-thin glass with excellent mechanical strength.

[Background Art]

Ultra-thin glass is used in various fields, such as semiconductor substrates, cover windows for protecting displays of flexible electronic devices such as foldable or rollable ones, fingerprint sensors, and automotive glazing. For semiconductor substrates in which impact resistance is critical, high compressive stress and a large ion exchange depth are required, and for cover windows for protecting displays of flexible electronic devices, scratch resistance, impact resistance, and bendability are important. Various studies are being conducted to provide ultra-thin glass satisfying these properties, and for example, Korean Patent Publication No. 10-2020-0014266 discloses an ultra-thin glass article having both high resistance to sharp contact and high flexibility.

When a glass article is bent, tensile stress acts on the surface opposite to the bending direction, and such tensile stress may cause the glass article to break. In this case, if a compressive stress greater than the tensile stress acts on the glass article, breakage due to bending can be minimized. In addition, even in the case of glass articles used for fingerprint sensors, automotive glazing, etc., excellent scratch resistance and impact resistance are required because they are frequently exposed to the external environment, and high compressive stress is required to improve these properties.

However, with conventional technology, it is impossible to predict compressive stress from the glass composition, so there is difficulty in manufacturing glass articles suitable for various uses. In particular, since ultra-thin glass is prone to cracking or fracture, it is common to subject the glass product to a chemical strengthening process to increase its reliability. In such a case, if the compressive stress of the glass product after chemical strengthening does not meet the required standard, the process of changing the composition of the glass product, manufacturing the glass product, and chemically strengthening it must be repeated. Accordingly, there is a demand for a technology capable of predicting the compressive stress of the glass product after chemical strengthening from its composition, thereby reducing the required time and costs.

[Disclosure]

[Technical Problem]

The present invention provides ultra-thin glass with excellent mechanical strength. In particular, the present invention provides ultra-thin glass with excellent mechanical strength by controlling compressive stress according to the glass composition.

[Technical Solution]

The present invention provides a glass article in which the compressive stress (y) after chemical strengthening satisfies Formula (1) or Formula (2) below: (1) $y = k[MgO] + b$, (2) $y = k'[ZnO] + b'$, wherein k is $14.95\pm3.9$, b is c $[Al_2O_3]/[SiO_2] + d$, c is $2,836.07\pm50.52$, d is $390.5\pm8.6$, k' is $38.89\pm2.5$, b' is $853.29\pm13.2$, and [MgO] is the content (mol%) of MgO, [ZnO] is the content (mol%) of ZnO, $[Al_2O_3]$ is the content (mol%) of $Al_2O_3$, and $[SiO_2]$ is the content (mol%) of $SiO_2$, based on the total content of the glass article.

[Advantageous Effects]

The present invention provides ultra-thin glass with excellent mechanical strength. In particular, the present invention enables control of compressive stress according to the glass composition, thereby enabling easy manufacture of various products suitable for ultra-thin glass applications.

[Best Mode]

Hereinafter, the present invention will be described in detail. However, the following description is not intended to be limiting, and each component may be variously modified or optionally combined as needed. Therefore, it should be understood to include all modifications, equivalents, and substitutes encompassed by the spirit and technical scope of the present invention.

The glass article of the present invention has a compressive stress (y) after chemical strengthening that satisfies Formula (1) or Formula (2) below.

$$(1)\ y = k[MgO] + b$$

$$(2)\ y = k'[ZnO] + b'$$

in Formulas (1) and (2),

k is $14.95\pm3.9$,
b is $c[Al_2O_3]/[SiO_2] + d$,
c is $2,836.07\pm50.52$,
d is $390.5\pm8.6$,
k' is $38.89\pm2.5$,
b' is $853.29\pm13.2$,
$[MgO]$ is the content (mol%) of MgO based on the total content of the glass article,
$[ZnO]$ is the content (mol%) of ZnO based on the total content of the glass article,
$[Al_2O_3]$ is the content (mol%) of $Al_2O_3$ based on the total content of the glass article, and
$[SiO_2]$ is the content (mol%) of $SiO_2$ based on the total content of the glass article.
However, the following conditions apply: $[MgO] + [ZnO] > 0$, and
when $[ZnO] = 0$, Formula (1) is satisfied,
when $[MgO] = 0$ and $[Al_2O_3]/[SiO_2] = 0.19$, Formula (2) is satisfied, and
when neither $[MgO]$ nor $[ZnO]$ is 0, Formula (1) is satisfied.

The chemical strengthening may be performed by immersing the glass article in a $KNO_3$ molten salt bath (390 °C) for 1 hour.

The glass article of the present invention may include $SiO_2$, $Al_2O_3$, $R_2O$ (R = $Li^+$, $Na^+$, $K^+$), R'O (R' = Mg, Ca, Sr, Ba). The glass article of the present invention may further include ZnO, $SnO_2$, CaO, SrO, BaO, and mixtures thereof. The glass article of the present invention does not contain glass-forming oxides with high hygroscopicity, such as $B_2O_3$ and $P_2O_5$.

$SiO_2$ serves as a glass-forming oxide in aluminosilicate-based glass articles and provides rigidity to the glass.

Based on the total content of the glass article, 40 to 80 mol%, for example, 55 to 75 mol%, of $SiO_2$ may be included. If the $SiO_2$ content is below the above range, the strength of the glass may decrease, and if it exceeds the above range, the melting temperature may increase, thereby reducing the formability of the glass melt.

$Al_2O_3$ serves as an intermediate, a charge balancer, or a glass-forming oxide in aluminosilicate-based glass articles, and together with $SiO_2$, provides rigidity to the glass. The contents of $Al_2O_3$ and alkali metal oxides $R_2O$ (R = $Li^+$, $Na^+$, $K^+$) affect the structure and properties of aluminosilicate-based glass. When $Al_2O_3$ is present in excess of $R_2O$ in the glass composition, $Al_2O_3$ is no longer substituted for $Si^{4+}$ but instead is present in the form of $Al^{5+}$ and $Al^{6+}$ species. This increases the liquid fragility index (m), which may induce glass crystallization. In addition, an increase in the $Al_2O_3$ content raises the melting temperature, thereby reducing the formability of the glass melt. On the other hand, when $R_2O$ is present in excess of $Al_2O_3$, Al ions are substituted for Si to form $AlO_4^-$ units. Li, Na, and K ions combine with $AlO_4^-$ to provide charge compensation, while alkali metal ions that do not participate in chemical strengthening break Si-O bonds in $SiO_2$, which is a glass network former. This may lead to a decrease in free volume inside the glass, and, consequently, compressive stress and ion exchange depth may be reduced.

Based on the total content of the glass article, 5 to 25 mol%, for example, 8 to 15 mol%, of $Al_2O_3$ may be included. If the $Al_2O_3$ content is below the above range, the strength of the glass may decrease, and if it exceeds the above range, glass crystallization may be induced, or the melting temperature may increase, thereby reducing the formability of the glass melt.

Alkali metal oxides $R_2O$ (R = $Li^+$, $Na^+$, $K^+$) serve as modifiers or charge compensators. $R_2O$ breaks the bonds of glass formers by disrupting Si-O bonds to form non-bridging oxides. As a result, $R_2O$ serves to lower the melting point and viscosity of the glass melt and affects the coefficient of thermal expansion of the glass melt. For example, $Na_2O$ and $K_2O$ may be used together as alkali metal oxides, and in such cases, acid resistance may be increased.

Based on the total content of the glass article, 8 to 30 mol%, for example, 10 to 25 mol%, of alkali metal oxide may be included. For example, based on the total content of the glass article, 8 to 20 mol%, for example, 9 to 18 mol%, of $Na_2O$ and 0 to 10 mol%, for example, 0 to 5 mol%, of $K_2O$ may be included. If the $Na_2O$ content is below the above range, the Na content inside the glass is low, so the number of alkali metals participating in chemical strengthening becomes insufficient, and compressive stress may be reduced. If it exceeds the above range, Si-O bonds in $SiO_2$ are broken, leading to a decrease in free volume inside the glass, thereby reducing compressive stress and ion exchange depth. If the $K_2O$ content

is below the above range, acid resistance may be weakened, and if it exceeds the above range, the Na content inside the glass decreases, reducing compressive stress due to chemical strengthening.

Alkaline earth metal oxides R'O (R' = Mg, Ca, Sr, Ba) may affect violations of the Al-avoidance rule, thereby causing changes in the internal structure of aluminosilicate-based glass.

For example, alkaline earth metal compounds may include MgO. Compared to other alkaline earth metals, MgO may lower the density due to its lower atomic number and reduce high-temperature viscosity to significantly improve the meltability of glass without lowering the strain point. However, among alkaline earth metals, $Mg^{2+}$ has higher ionic field strength than $Ca^{2+}$, $Sr^{2+}$, or $Ba^{2+}$, and facilitates the formation of 5- and 6-coordinated aluminum in $Al_2O_3$. In aluminosilicate compositions, $Al_2O_3$ acts as a glass network former or intermediate oxide to form a strong glass network structure. However, when $Al_2O_3$ has 5- and 6-coordination numbers, it causes glass crystallization. Therefore, when MgO is included, it causes violations of the Al-avoidance rule in the internal structure of aluminosilicate-based glass, inducing Si-O-Si and Al-O-Al bonds. Thus, including large amounts of MgO may induce precipitation of Mg-Si-O series crystals. High ionic field strength also reduces the free volume within the glass, which makes it more difficult for $K^+$ ions, which have a larger atomic radius than $Na^+$ ions contained inside the glass, to penetrate the glass. This may result in reduced compressive stress or decreased ion exchange depth generated by the substituted $K^+$ ions. In contrast, when CaO, SrO, or BaO is included, the internal structure of aluminosilicate-based glass tends to contain more Si-O-Al bonds rather than Al-O-Al or Si-O-Si bonds.

Based on the total content of the glass article, 0 to 10 mol%, for example, 0 to 8 mol%, of alkaline earth metal oxide may be included. For example, based on the total content of the glass article, 0 to 10 mol%, for example, 0 to 8 mol%, of MgO may be included. If the MgO content is below the above range, melting of the glass material may become difficult. If it exceeds the above range, the free volume inside the glass may decrease, making chemical strengthening difficult.

The ionic field strength of ZnO is comparable to that of MgO. When ZnO is included, many Si-O-Al bonds may be present in the internal structure of aluminosilicate-based glass. Based on the total content of the glass article, 0 to 10 mol%, for example, 0 to 8 mol%, of ZnO may be included. If the ZnO content is below the above range, melting of the glass material may become difficult, and if it exceeds the above range, crystallization may occur.

For example, the glass article of the present invention may include MgO, ZnO, or a mixture thereof. As another example, the glass article of the present invention may include MgO and ZnO. Since the ionic field strength of ZnO is comparable to that of MgO and has a similar glass structure, it plays a similar role in expressing glass properties. However, as the ZnO content increases, devitrification may occur during glass production. Therefore, it is preferable that the ZnO content in the glass article is 50 mol% or less, for example, 25 mol% or less, or alternatively, 10 mol% or less, of the MgO content.

The glass article of the present invention includes, based on the total content of the glass article, 40 to 80 mol% of $SiO_2$, 5 to 25 mol% of $Al_2O_3$, 8 to 20 mol% of $Na_2O$, 0 to 10 mol% of $K_2O$, 0 to 10 mol% of MgO, and 0 to 10 mol% of ZnO.

In addition to the oxides described above, the glass article of the present invention may further include $SnO_2$, CaO, SrO, BaO, and mixtures thereof. For example, based on the total content of the glass article, 0 to 0.5 mol%, for example, 0 to 0.3 mol%, of $SnO_2$, 0 to 10 mol%, for example, 0 to 8 mol%, of CaO, 0 to 10 mol%, for example, 0 to 5 mol%, of SrO, and 0 to 10 mol%, for example, 0 to 8 mol%, of BaO may be included.

In the present invention, through consideration and experimentation of the following factors, a relationship was derived for calculating the compressive stress of alkali aluminosilicate glass from the MgO or ZnO content.

MgO promotes ion exchange, but also causes violations of the Al-avoidance rule in the internal structure of glass, inducing Si-O-Si and Al-O-Al bonds. Thus, including large amounts of MgO may induce precipitation of Mg-Si-O series crystals. High ionic field strength also reduces the free volume within the glass, which makes it more difficult for $K^+$ ions, which have a larger atomic radius than $Na^+$ ions contained inside the glass, to penetrate the glass. This may result in reduced compressive stress or decreased ion exchange depth generated by the substituted $K^+$ ions. Accordingly, MgO significantly affects chemical strengthening.

In addition, the glass structure of alkali aluminosilicate glass is greatly affected by the $[Al_2O_3/SiO_2]$ ratio.

The present invention confirms that chemical strengthening of alkali aluminosilicate glass correlates closely with the internal structure of glass, allowing compressive stress to be calculated based on structural changes. This indicates that, with sufficient understanding of the internal structure of glass, compressive stress can be accurately derived from the composition constituting alkali aluminosilicate glass under given conditions.

Meanwhile, in aluminosilicate-based glass, the Anderson-Stuart model has been proposed to describe the relationship between Al and $R_2O$, based on the activation energy and Coulomb energy required for ion conduction, and the effects of glass structural deformation on ion conduction are well known. These findings indicate a stronger correlation with ion exchange depth associated with ion movement than with the mechanism of compressive stress generation in chemical strengthening based on ion exchange. Recently, attempts have been made to explain the reason of compressive stress from the perspective of the glass structure. However, although the general trend of compressive stress in chemically strengthened glass can be identified, accurate quantitative values have not been successfully derived.

In the present invention, it was considered that chemical strengthening occurs through ion exchange and that compressive stress can arise from changes in the glass structure induced by the exchanged ions during the ion-exchange process.

The glass composition was classified into glass network former, glass network intermediate, and glass network modifier according to the classification method (Sun classification) proposed by Kuan-Han Sun in 1947. In the present invention, the $Al_2O_3$-$R_2O$ relationship and ion conduction by glass network modifiers based on the Anderson-Stuart model were considered. In addition, considering the reason of compressive stress, the $Al_2O_3$-$SiO_2$ relationship as well as the $Al_2O_3$-$R_2O$ relationship were considered. By comprehensively accounting for the above factors, experiments were conducted by categorizing the glass composition elements classified under the Sun classification according to their absolute amounts and ratios. As a result, factors that significantly affect ion conduction and the glass structure were identified, and it was confirmed that the relationships between them exhibit linearity and that sufficiently accurate compressive stress can be calculated solely from the glass composition.

For example, the glass article of the present invention has a compressive stress (y) after chemical strengthening that satisfies Formula (1) below.

$$(1)\ y = k[MgO] + b$$

in Formula (1),

k is $14.95 \pm 3.9$,
b is $c[Al_2O_3]/[SiO_2] + d$,
c is $2{,}836.07 \pm 50.52$,
d is $390.5 \pm 8.6$,
[MgO] is the content (mol%) of MgO based on the total content of the glass article,
[$Al_2O_3$] is the content (mol%) of $Al_2O_3$ based on the total content of the glass article, and
[$SiO_2$] is the content (mol%) of $SiO_2$ based on the total content of the glass article.
However, the following conditions apply: [MgO] + [ZnO] > 0, and
when [ZnO] = 0, Formula (1) is satisfied,
when [MgO] = 0 and [$Al_2O_3$]/[$SiO_2$] = 0.19, Formula (2) below is satisfied, and
when neither [MgO] nor [ZnO] is 0, Formula (1) is satisfied.
Chemical strengthening may be performed by immersing the glass article in a $KNO_3$ molten salt bath (390 °C) for 1 hour.

In the present invention, the compressive stress (y) of the glass article is proportional to [MgO] and [$Al_2O_3$]/[$SiO_2$]. Depending on [MgO] and [$Al_2O_3$]/[$SiO_2$], the atomic structure and the number of alkali metal ions inside the glass change, thereby affecting the compressive stress.

As another example, the glass article of the present invention has a compressive stress (y) after chemical strengthening that satisfies Formula (2) below.

$$(2)\ y = k'[ZnO] + b'$$

in Formula (2),

k' is $38.89 \pm 2.5$,
b' is $853.29 \pm 13.2$, and
[ZnO] is the content (mol%) of ZnO based on the total content of the glass article.
However, the following conditions apply: [MgO] + [ZnO] > 0, and
when [ZnO] = 0, Formula (1) above is satisfied,
when [MgO] = 0 and [$Al_2O_3$]/[$SiO_2$] = 0.19, Formula (2) is satisfied, and
when neither [MgO] nor [ZnO] is 0, Formula (1) above is satisfied.

Chemical strengthening may be performed by immersing the glass article in a $KNO_3$ molten salt bath (390 °C) for 1 hour.

In the present invention, the compressive stress (y) of the glass article is proportional to [ZnO]. Depending on [ZnO], the atomic structure and the number of alkali metal ions inside the glass change, thereby affecting the compressive stress.

For example, the glass article of the present invention satisfies Formula (3) below.

(3) $\qquad$ $[ZnO] + [Y_2O_3] + [TiO_2] + [ZrO_2] + [Nb_2O_5] \leq [MgO]/2$

in Formula (3),

[ZnO] is the content (mol%) of ZnO based on the total content of the glass article,
[$Y_2O_3$] is the content (mol%) of $Y_2O_3$ based on the total content of the glass article,
[$TiO_2$] is the content (mol%) of $TiO_2$ based on the total content of the glass article,
[$ZrO_2$] is the content (mol%) of $ZrO_2$ based on the total content of the glass article,
[$Nb_2O_5$] is the content (mol%) of $Nb_2O_5$ based on the total content of the glass article, and
[MgO] is the content (mol%) of MgO based on the total content of the glass article.

For example, the glass article of the present invention satisfies Formula (4) below.

$$(4)\ [Al_2O_3]/[R_2O] \leq 1$$

in Formula (4),

[$Al_2O_3$] is the content (mol%) of $Al_2O_3$ based on the total content of the glass article,
[$R_2O$] is the content (mol%) of $R_2O$ based on the total content of the glass article, and
R is one or more elements selected from the group consisting of Li, Na, and K.

The contents of $Al_2O_3$ and alkali metal oxides $R_2O$ (R = $Li^+$, $Na^+$, $K^+$) affect the structure and properties of aluminosilicate-based glass. When $Al_2O_3$ is present in excess of $R_2O$ in the glass composition, $Al_2O_3$ is no longer substituted for $Si^{4+}$ but instead is present in the form of $Al^{5+}$ and $Al^{6+}$ species. This increases the liquid fragility index (m), which may include glass crystallization. In addition, an increase in the $Al_2O_3$ content raises the melting temperature, thereby reducing the formability of the glass melt. On the other hand, when $R_2O$ is present in excess of $Al_2O_3$, Al ions are substituted for Si to form $AlO_4^-$ units. Li, Na, K ions combine with $AlO_4^-$ to provide charge compensation, while alkali metal ions that do not participate in chemical strengthening break Si-O bonds in $SiO_2$, which is a glass network former. This may lead to a decrease in free volume inside the glass, and, consequently, compressive stress and ion exchange depth may be reduced. When $[Al_2O_3]/[R_2O] \leq 1$, excellent compressive stress may be achieved. In particular, when $[Al_2O_3]/[R_2O] < 0.8$, or as another example, $0.5 < [Al_2O_3]/[R_2O] < 0.7$, not only excellent compressive stress but also high formability may be achieved.

For example, the glass article of the present invention satisfies Formula (5) below.

$$(5)\ [GNI]/[SiO_2] < 0.5$$

in Formula (5),

[$SiO_2$] is the content (mol%) of $SiO_2$ based on the total content of the glass article,
[GNI] is the content (mol%) of a glass network intermediate (GNI) based on the total content of the glass article, wherein GNI is an intermediate oxide having an e value of 60 to 80, e = E/n, E is the dissociation energy required to completely dissociate 1 mol of oxide ($MO_{y/x}$), and n is the oxygen coordination number of a metal atom M. For example, GNI may include oxides of Al, Zn, Ti, Nb, Mn, Fe, Zr, Mo, W, and Ta.

The contents of GNI and $SiO_2$ affect the structure and properties of aluminosilicate-based glass. As the [GNI]/[$SiO_2$] ratio increases, the number of bridging oxygens decreases and non-bridging oxygens increase. The increase in non-bridging oxygens may lead to a reduction in free volume inside the glass, which may consequently reduce the compressive stress. When [GNI]/[$SiO_2$] < 0.5, excellent compressive stress may be achieved.

For example, the glass article of the present invention satisfies Formula (6) below.

$$(6)\ [ZnO] < [MgO]/2$$

in Formula (6),

[ZnO] is the content (mol%) of ZnO based on the total content of the glass article, and
[MgO] is the content (mol%) of MgO based on the total content of the glass article.

The glass article of the present invention has a compressive stress of 300 to 1,300 MPa, for example, 500 to 1,200 MPa, an ion exchange depth of 50% or less, for example, 45% or less, of the total glass thickness, a thickness of 500 μm or less, for example, 30 to 300 μm, a coefficient of thermal expansion of 4.0 ppm/°C or more, for example, 6 to 11 ppm/°C, and a pencil hardness of 3H or more. In addition, in the present invention, the minimum radius of curvature of the glass article is 3 mm or less, for example, 1.5 mm or less, as another example, 0.3 to 3 mm, and as still another example, 0.3 to 1.5 mm. When the minimum radius of curvature of the glass article satisfies the above range, it is suitable for application to flexible displays due to the development of form factors.

[Modes of the Invention]

Hereinafter, the present invention will be described in more detail through experimental examples. However, the following examples are provided only to facilitate understanding of the present invention, and the scope of the present invention is not limited to the examples in any way.

**[Experimental Examples 1-28]**

Glass compositions for the experimental examples were prepared according to Tables 1-5 below. Glass articles manufactured using the glass composition of each experimental example were strengthened by the method described below, and their properties were measured and listed in Tables 1-5 below.

Chemical strengthening

Glass articles manufactured using the glass composition of each experimental example were immersed in a $KNO_3$ molten salt bath (390 °C) for 1 hour.

Compressive stress and ion exchange depth

For the chemically strengthened glass articles of each experimental example, compressive stress and ion exchange depth were measured according to ASTM 1422C-99 and ASTM 1279.19779 (measurement device: FSM-6000, Orihara Industrial Co., Ltd., Tokyo, Japan).

Pen drop test

A pen was dropped from a position 10 mm above the surface of the glass article of each experimental example, and the presence or absence of cracks on the glass surface was checked. When no cracks occurred, the pen was dropped from successively higher positions in 5 mm increments while checking for cracks, and the highest height at which no cracks occurred was measured. Heights of 30 mm or more were evaluated as pass, and heights less than 30 mm was evaluated as fail.

Bending test

Using a universal testing machine (UTM), the glass article of each experimental example was positioned between the upper plate surface and lower plate surface of the UTM. As the upper plate was lowered, the gap (bending radius) between the upper and lower plates immediately before the glass article fractured was measured. Bending radii of 1.5 mm or less were evaluated as pass, and those exceeding 1.5 mm were evaluated as fail.

[Table 1]

| Component (mol%) | Experimental Example | | | | | |
|---|---|---|---|---|---|---|
| | 1 | 2 | 3 | 4 | 5 | 6 |
| $SiO_2$ | 70.8 | 70.04 | 69.34 | 68.61 | 67.15 | 66.8 |
| $Al_2O_3$ | 10.62 | 10.51 | 10.4 | 10.29 | 10.07 | 10.9 |
| $Na_2O$ | 14.02 | 13.87 | 13.73 | 13.59 | 13.3 | 13.4 |
| $K_2O$ | 1.56 | 1.58 | 1.53 | 1.51 | 1.48 | 2.7 |
| MgO | 2.8 | 3.8 | 4.8 | 5.8 | 7.8 | 6 |
| ZnO | | | | | | |

(continued)

| Component (mol%) | Experimental Example | | | | | |
|---|---|---|---|---|---|---|
| | 1 | 2 | 3 | 4 | 5 | 6 |
| $SnO_2$ | 0.2 | 0.2 | 0.2 | 0.2 | 0.2 | 0.2 |
| Total | 100 | 100 | 100 | 100 | 100 | 100 |
| $[Al_2O_3]/[SiO_2]$ | 0.15 | 0.15 | 0.15 | 0.15 | 0.15 | 0.16 |
| Calculated compressive stress (min) | 830.7 | 841.9 | 852.7 | 863.8 | 885.8 | 902.7 |
| Calculated compressive stress (max) | 884.9 | 903.9 | 922.5 | 941.4 | 979 | 983.2 |
| Measured compressive stress (MPa) | 845.4 | 864.5 | 890.5 | 904.3 | 913 | 920 |
| Ion exchange depth ($\mu$m) | 17.4 | 17.4 | 16.6 | 15 | 12.5 | 17.6 |
| Pen drop test | Fail | Fail | Fail | Fail | Fail | Fail |
| Bending test | Fail | Fail | Fail | Fail | Fail | Pass |

[Table 2]

| Component (mol%) | Experimental Example | | | | | |
|---|---|---|---|---|---|---|
| | 7 | 8 | 9 | 10 | 11 | 12 |
| $SiO_2$ | 68.31 | 67.61 | 66.7 | 66.91 | 66.2 | 64.79 |
| $Al_2O_3$ | 11.61 | 11.49 | 11.6 | 11.37 | 11.25 | 11.01 |
| $Na_2O$ | 15.37 | 15.21 | 15.8 | 15.05 | 14.9 | 14.58 |
| $K_2O$ | 1.71 | 1.69 | 1.5 | 1.67 | 1.65 | 1.62 |
| MgO | 2.8 | 3.8 | 4.2 | 4.8 | 5.8 | 7.8 |
| ZnO | | | | | | |
| $SnO_2$ | 0.2 | 0.2 | 0.2 | 0.2 | 0.2 | 0.2 |
| Total | 100 | 100 | 100 | 100 | 100 | 100 |
| $[Al_2O_3]/[SiO_2]$ | 0.17 | 0.17 | 0.17 | 0.17 | 0.17 | 0.17 |
| Calculated compressive stress (min) | 886.3 | 897.3 | 912.8 | 908.3 | 919.4 | 941.4 |
| Calculated compressive stress (max) | 942.5 | 961.3 | 980.3 | 980.1 | 999 | 1036.7 |
| Measured compressive stress (MPa) | 913.4 | 912.8 | 953.2 | 947.3 | 971.4 | 978.9 |
| Ion exchange depth ($\mu$m) | 17 | 17.5 | 15.2 | 16.8 | 15.4 | 12.4 |
| Pen drop test | Fail | Fail | Pass | Pass | Pass | Pass |
| Bending test | Pass | Pass | Pass | Pass | Pass | Pass |

[Table 3]

| Component (mol%) | Experimental Example | | | | | |
|---|---|---|---|---|---|---|
| | 13 | 14 | 15 | 16 | 17 | 18 |
| $SiO_2$ | 66.35 | 65.67 | 65 | 64.32 | 63.64 | 62.29 |
| $Al_2O_3$ | 12.8 | 12.68 | 12.55 | 12.41 | 12.28 | 12.02 |
| $Na_2O$ | 16.97 | 16.79 | 16.6 | 16.44 | 16.27 | 15.92 |
| $K_2O$ | 1.88 | 1.86 | 1.85 | 1.83 | 1.81 | 1.77 |
| MgO | 1.8 | 2.8 | 3.8 | 4.8 | 5.8 | 7.8 |
| ZnO | | | | | | |
| $SnO_2$ | 0.2 | 0.2 | 0.2 | 0.2 | 0.2 | 0.2 |

(continued)

| Component (mol%) | Experimental Example | | | | | |
|---|---|---|---|---|---|---|
| | 13 | 14 | 15 | 16 | 17 | 18 |
| Total | 100 | 100 | 100 | 100 | 100 | 100 |
| $[Al_2O_3]/[SiO_2]$ | 0.19 | 0.19 | 0.19 | 0.19 | 0.19 | 0.19 |
| Calculated compressive stress (min) | 939.2 | 950.7 | 961.7 | 972.4 | 983.5 | 1005.6 |
| Calculated compressive stress (max) | 989.9 | 1009.2 | 1028.1 | 1046.5 | 1065.4 | 1103.2 |
| Measured compressive stress (MPa) | 954.4 | 969.4 | 1007 | 994.8 | 1028.2 | 1055 |
| Ion exchange depth ($\mu$m) | 17.4 | 17.3 | 16.8 | 15.3 | 14.6 | 12.4 |
| Pen drop test | Pass | Pass | Pass | Pass | Pass | Pass |
| Bending test | Pass | Pass | Pass | Pass | Pass | Pass |

[Table 4]

| Component (mol%) | Experimental Example | | | | | |
|---|---|---|---|---|---|---|
| | 19 | 20 | 21 | 22 | 23 | 24 |
| $SiO_2$ | 65.3 | 65.67 | 65 | 64.32 | 63.64 | 62.29 |
| $Al_2O_3$ | 12.3 | 12.68 | 12.55 | 12.41 | 12.28 | 12.02 |
| $Na_2O$ | 15.5 | 16.79 | 16.6 | 16.44 | 16.27 | 15.92 |
| $K_2O$ | 1.5 | 1.86 | 1.85 | 1.83 | 1.81 | 1.77 |
| MgO | 5.2 | | | | | |
| ZnO | | 2.8 | 3.8 | 4.8 | 5.8 | 7.8 |
| $SnO_2$ | 0.2 | 0.2 | 0.2 | 0.2 | 0.2 | 0.2 |
| Total | 100 | 100 | 100 | 100 | 100 | 100 |
| $[Al_2O_3]/[SiO_2]$ | 0.19 | 0.19 | 0.19 | 0.19 | 0.19 | 0.19 |
| Calculated compressive stress (min) | 964.1 | 942 | 978.4 | 1014.8 | 1051.2 | 1123.9 |
| Calculated compressive stress (max) | 1040.8 | 982.4 | 1023.8 | 1065.2 | 1106.6 | 1189.3 |
| Measured compressive stress (MPa) | 1032 | 954.8 | 1005 | 1039 | 1091 | 1149 |
| Ion exchange depth ($\mu$m) | 16.8 | 17.9 | 17.7 | 17 | 15.4 | 13.9 |
| Pen drop test | Pass | Pass | Pass | Pass | Pass | Pass |
| Bending test | Pass | Pass | Pass | Pass | Pass | Pass |

[Table 5]

| Component (mol%) | Experimental Example | | | |
|---|---|---|---|---|
| | 25 | 26 | 27 | 28 |
| $SiO_2$ | 57.71 | 61.45 | 61.45 | 57.71 |
| $Al_2O_3$ | 10.96 | 11.68 | 11.68 | 10.96 |
| $Na_2O$ | 14.51 | 10.51 | 11.68 | 14.51 |
| $K_2O$ | 1.61 | 1.17 | | 1.61 |
| MgO | 15 | 15 | 15 | |
| ZnO | | | | 15 |
| $SnO_2$ | 0.2 | 0.2 | 0.2 | 0.2 |
| Total | 100 | 100 | 100 | 100 |

(continued)

| Component (mol%) | Experimental Example | | | |
| --- | --- | --- | --- | --- |
| | 25 | 26 | 27 | 28 |
| [Al$_2$O$_3$]/[SiO$_2$] | 0.19 | 0.19 | 0.19 | 0.19 |
| Calculated compressive stress (min) | 1076.7 | 1077.1 | 1077.1 | 1385.9 |
| Calculated compressive stress (max) | 1230.1 | 1230.5 | 1230.5 | 1487.3 |
| Measured compressive stress (MPa) | Not measurable | Not measurable | Not measurable | Not measurable |
| Ion exchange depth ($\mu$m) | Not measurable | Not measurable | Not measurable | Not measurable |
| Pen drop test | | | | |
| Bending test | | | | |

As shown in Tables 1-5 above, the glass articles of Experimental Examples 1-24 satisfy the composition according to the present invention and exhibit compressive stress (y) after chemical strengthening that satisfies Formula (1) or Formula (2). Thus, even without manufacturing the glass articles, chemically strengthening them, and performing property evaluations, the properties of the glass articles can be predicted using the compressive stress values calculated according to Formula (1) or Formula (2).

In contrast, the glass articles of Experimental Examples 25-28 do not satisfy the composition according to the present invention. For the glass articles of Experimental Examples 25-27, the high MgO content prevented chemical strengthening, in which K$^+$ ions penetrate the glass. For the glass article of Experimental Example 28, the high ZnO content caused crystal precipitation during manufacturing, making it impossible to manufacture the glass article.

[Industrial Applicability]

The present invention provides ultra-thin glass with excellent mechanical strength.

**Claims**

1. A glass article comprising 40 to 80 mol% of SiO$_2$, 5 to 25 mol% of Al$_2$O$_3$, 8 to 20 mol% of Na$_2$O, 0 to 10 mol% of K$_2$O, 0 to 10 mol% of MgO, and 0 to 10 mol% of ZnO, based on the total content of the glass article,

   wherein a compressive stress (y) after chemical strengthening satisfies Formula (1) or Formula (2) below:

$$(1)\ y = k[MgO] + b$$

$$(2)\ y = k'[ZnO] + b'$$

   in Formulas (1) and (2),

   k is 14.95$\pm$3.9,
   b is c[Al$_2$O$_3$]/[SiO$_2$] + d,
   c is 2,836.07$\pm$50.52,
   d is 390.5$\pm$8.6,
   k' is 38.89$\pm$2.5, and
   b' is 853.29$\pm$13.2,
   [MgO] is the content (mol%) of MgO based on the total content of the glass article,
   [ZnO] is the content (mol%) of ZnO based on the total content of the glass article,
   [Al$_2$O$_3$] is the content (mol%) of Al$_2$O$_3$ based on the total content of the glass article,
   [SiO$_2$] is the content (mol%) of SiO$_2$ based on the total content of the glass article, and
   [MgO] + [ZnO] > 0, and
   when [ZnO] = 0, Formula (1) is satisfied,
   when [MgO] = 0 and [Al$_2$O$_3$]/[SiO$_2$] = 0.19, Formula (2) is satisfied, and

when neither [MgO] nor [ZnO] is 0, Formula (1) is satisfied.

2. The glass article of claim 1, wherein Formula (3) below is satisfied:

$$(3)\ [ZnO] + [Y_2O_3] + [TiO_2] + [ZrO_2] + [Nb_2O_5] \leq [MgO]/2$$

in Formula (3),

[ZnO] is the content (mol%) of ZnO based on the total content of the glass article,
[$Y_2O_3$] is the content (mol%) of $Y_2O_3$ based on the total content of the glass article,
[$TiO_2$] is the content (mol%) of $TiO_2$ based on the total content of the glass article,
[$ZrO_2$] is the content (mol%) of $ZrO_2$ based on the total content of the glass article,
[$Nb_2O_5$] is the content (mol%) of $Nb_2O_5$ based on the total content of the glass article, and
[MgO] is the content (mol%) of MgO based on the total content of the glass article.

3. The glass article of claim 1, wherein Formula (4) below is satisfied:

$$(4)\ [Al_2O_3]/[R_2O] \leq 1$$

in Formula (4),

[$Al_2O_3$] is the content (mol%) of $Al_2O_3$ based on the total content of the glass article,
[$R_2O$] is the content (mol%) of $R_2O$ based on the total content of the glass article, and
R is one or more elements selected from the group consisting of Li, Na, and K.

4. The glass article of claim 1, wherein Formula (5) below is satisfied:

$$(5)\ [GNI]/[SiO_2] < 0.5$$

in Formula (5),

[GNI] is the content (mol%) of a glass network intermediate (GNI) based on the total content of the glass article,
GNI is an intermediate oxide having an e value of 60 to 80, e = E/n, E is the dissociation energy required to completely dissociate 1 mol of oxide ($MO_{y/x}$), and n is the oxygen coordination number of a metal atom M, and
[$SiO_2$] is the content (mol%) of $SiO_2$ based on the total content of the glass article.

5. The glass article of claim 1, wherein Formula (6) below is satisfied:

$$(6)\ [ZnO] < [MgO]/2$$

in Formula (6),

[ZnO] is the content (mol%) of ZnO based on the total content of the glass article, and
[MgO] is the content (mol%) of MgO based on the total content of the glass article.

6. The glass article of claim 1, further comprising 0 to 0.5 mol% of $SnO_2$, 0 to 10 mol% of CaO, 0 to 10 mol% of SrO, and 0 to 10 mol% of BaO, based on the total content of the glass article.

## INTERNATIONAL SEARCH REPORT

| International application No. |
| --- |
| **PCT/KR2024/009735** |

| A. | CLASSIFICATION OF SUBJECT MATTER |
| --- | --- |

C03C 3/083(2006.01)i; C03C 3/091(2006.01)i; C03C 3/093(2006.01)i; C03C 21/00(2006.01)i

According to International Patent Classification (IPC) or to both national classification and IPC

| B. | FIELDS SEARCHED |
| --- | --- |

Minimum documentation searched (classification system followed by classification symbols)

C03C 3/083(2006.01); C03C 10/00(2006.01); C03C 17/28(2006.01); C03C 21/00(2006.01); C03C 3/085(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유리 (glass), SiO2, Al2O3, Na2O, K2O, MgO, ZnO

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0038186 A (AGC INC.) 17 March 2023 (2023-03-17)<br>See paragraph [0065]; and claim 1. | 1-6 |
| A | KR 10-2023-0125343 A (AGC INC.) 29 August 2023 (2023-08-29)<br>See paragraph [0056]; and claim 8. | 1-6 |
| A | KR 10-2023-0088356 A (NIPPON ELECTRIC GLASS CO., LTD.) 19 June 2023 (2023-06-19)<br>See paragraphs [0023] and [0062]; and claim 1. | 1-6 |
| A | KR 10-2022-0038335 A (AGC INC.) 28 March 2022 (2022-03-28)<br>See paragraph [0029]; and claim 11. | 1-6 |
| A | WO 2018-186402 A1 (AGC INC.) 11 October 2018 (2018-10-11)<br>See paragraphs [0020]-[0022]. | 1-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2024** | **14 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009735**

| Patent document cited in search report | | | Publication date (day/month/year) | Patent family member(s) | | | Publication date (day/month/year) |
|---|---|---|---|---|---|---|---|
| KR | 10-2023-0038186 | A | 17 March 2023 | CN | 115776973 | A | 10 March 2023 |
| | | | | EP | 4180400 | A1 | 17 May 2023 |
| | | | | EP | 4180400 | A4 | 24 July 2024 |
| | | | | US | 2023-0112685 | A1 | 13 April 2023 |
| | | | | WO | 2022-009850 | A1 | 13 January 2022 |
| KR | 10-2023-0125343 | A | 29 August 2023 | CN | 108473370 | A | 31 August 2018 |
| | | | | CN | 108473370 | B | 01 November 2022 |
| | | | | CN | 109133670 | A | 04 January 2019 |
| | | | | CN | 109133670 | B | 01 October 2019 |
| | | | | CN | 109320098 | A | 12 February 2019 |
| | | | | CN | 109320098 | B | 24 September 2021 |
| | | | | CN | 109455926 | A | 12 March 2019 |
| | | | | CN | 109455926 | B | 19 November 2019 |
| | | | | CN | 110255892 | A | 20 September 2019 |
| | | | | CN | 110255892 | B | 09 December 2022 |
| | | | | CN | 110330228 | A | 15 October 2019 |
| | | | | CN | 113024108 | A | 25 June 2021 |
| | | | | CN | 113024108 | B | 18 August 2023 |
| | | | | CN | 113754276 | A | 07 December 2021 |
| | | | | CN | 113754276 | B | 18 August 2023 |
| | | | | CN | 113800783 | A | 17 December 2021 |
| | | | | CN | 114315133 | A | 12 April 2022 |
| | | | | CN | 114315133 | B | 07 April 2023 |
| | | | | CN | 114349368 | A | 15 April 2022 |
| | | | | CN | 114349368 | B | 25 November 2022 |
| | | | | CN | 115572076 | A | 06 January 2023 |
| | | | | CN | 115572077 | A | 06 January 2023 |
| | | | | CN | 115650601 | A | 31 January 2023 |
| | | | | CN | 115650601 | B | 12 July 2024 |
| | | | | CN | 115650602 | A | 31 January 2023 |
| | | | | CN | 115650602 | B | 18 June 2024 |
| | | | | CN | 115677235 | A | 03 February 2023 |
| | | | | JP | 2018-065744 | A | 26 April 2018 |
| | | | | JP | 2018-104285 | A | 05 July 2018 |
| | | | | JP | 2019-011249 | A | 24 January 2019 |
| | | | | JP | 2019-147739 | A | 05 September 2019 |
| | | | | JP | 2019-202934 | A | 28 November 2019 |
| | | | | JP | 2022-082778 | A | 02 June 2022 |
| | | | | JP | 2024-096285 | A | 12 July 2024 |
| | | | | JP | 6327407 | B2 | 23 May 2018 |
| | | | | JP | 6394776 | B2 | 26 September 2018 |
| | | | | JP | 6424978 | B2 | 21 November 2018 |
| | | | | JP | 6583511 | B2 | 02 October 2019 |
| | | | | JP | 6583583 | B2 | 02 October 2019 |
| | | | | JP | 7059993 | B2 | 26 April 2022 |
| | | | | KR | 10-1927014 | B1 | 07 December 2018 |
| | | | | KR | 10-2018-0098473 | A | 04 September 2018 |
| | | | | KR | 10-2018-0098535 | A | 04 September 2018 |
| | | | | KR | 10-2018-0117724 | A | 29 October 2018 |
| | | | | KR | 10-2019-0034709 | A | 02 April 2019 |

Form PCT/ISA/210 (patent family annex) (July 2022)

## INTERNATIONAL SEARCH REPORT
### Information on patent family members

International application No.

**PCT/KR2024/009735**

| Patent document cited in search report | | | Publication date (day/month/year) | Patent family member(s) | | | Publication date (day/month/year) |
|---|---|---|---|---|---|---|---|
| | | | | KR | 10-2019-0062626 | A | 05 June 2019 |
| | | | | KR | 10-2019-0075173 | A | 28 June 2019 |
| | | | | KR | 10-2019-0134846 | A | 04 December 2019 |
| | | | | KR | 10-2020-0062395 | A | 03 June 2020 |
| | | | | KR | 10-2020-0109398 | A | 22 September 2020 |
| | | | | KR | 10-2021-0106006 | A | 27 August 2021 |
| | | | | KR | 10-2024126 | B1 | 23 September 2019 |
| | | | | KR | 10-2027956 | B1 | 02 October 2019 |
| | | | | KR | 10-2073143 | B1 | 04 February 2020 |
| | | | | KR | 10-2074835 | B1 | 07 February 2020 |
| | | | | KR | 10-2121414 | B1 | 10 June 2020 |
| | | | | KR | 10-2126835 | B1 | 25 June 2020 |
| | | | | KR | 10-2161536 | B1 | 05 October 2020 |
| | | | | KR | 10-2292273 | B1 | 24 August 2021 |
| | | | | KR | 10-2569434 | B1 | 23 August 2023 |
| | | | | KR | 10-2630405 | B1 | 30 January 2024 |
| | | | | US | 10370287 | B2 | 06 August 2019 |
| | | | | US | 10384974 | B2 | 20 August 2019 |
| | | | | US | 10472272 | B2 | 12 November 2019 |
| | | | | US | 11767252 | B2 | 26 September 2023 |
| | | | | US | 2018-0186685 | A1 | 05 July 2018 |
| | | | | US | 2018-0265397 | A1 | 20 September 2018 |
| | | | | US | 2018-0327304 | A1 | 15 November 2018 |
| | | | | US | 2019-0194057 | A1 | 27 June 2019 |
| | | | | US | 2021-0053867 | A1 | 25 February 2021 |
| | | | | WO | 2017-126607 | A1 | 27 July 2017 |
| KR | 10-2023-0088356 | A | 19 June 2023 | CN | 116348429 | A | 27 June 2023 |
| | | | | EP | 4230594 | A1 | 23 August 2023 |
| | | | | US | 2023-0312403 | A1 | 05 October 2023 |
| | | | | WO | 2022-080226 | A1 | 21 April 2022 |
| KR | 10-2022-0038335 | A | 28 March 2022 | CN | 114096489 | A | 25 February 2022 |
| | | | | CN | 114096489 | B | 20 February 2024 |
| | | | | CN | 118047532 | A | 17 May 2024 |
| | | | | CN | 118047533 | A | 17 May 2024 |
| | | | | US | 2022-0135466 | A1 | 05 May 2022 |
| | | | | WO | 2021-010376 | A1 | 21 January 2021 |
| WO | 2018-186402 | A1 | 11 October 2018 | CN | 110461795 | A | 15 November 2019 |
| | | | | CN | 110461795 | B | 31 May 2022 |
| | | | | CN | 114835391 | A | 02 August 2022 |
| | | | | CN | 114835391 | B | 07 November 2023 |
| | | | | JP | 2020-186402 | A1 | 20 February 2020 |
| | | | | JP | 2022-118193 | A | 12 August 2022 |
| | | | | JP | 2023-078445 | A | 06 June 2023 |
| | | | | JP | 7095686 | B2 | 05 July 2022 |
| | | | | JP | 7260041 | B2 | 18 April 2023 |
| | | | | JP | 7444311 | B2 | 06 March 2024 |
| | | | | KR | 10-2019-0130585 | A | 22 November 2019 |
| | | | | KR | 10-2023-0095128 | A | 28 June 2023 |
| | | | | KR | 10-2547240 | B1 | 26 June 2023 |
| | | | | KR | 10-2695281 | B1 | 16 August 2024 |

Form PCT/ISA/210 (patent family annex) (July 2022)

INTERNATIONAL SEARCH REPORT
Information on patent family members

International application No.

**PCT/KR2024/009735**

| Patent document cited in search report | Publication date (day/month/year) | Patent family member(s) | | Publication date (day/month/year) |
|---|---|---|---|---|
| | | US | 11312656 B2 | 26 April 2022 |
| | | US | 11718557 B2 | 08 August 2023 |
| | | US | 2020-0039876 A1 | 06 February 2020 |
| | | US | 2022-0204400 A1 | 30 June 2022 |
| | | US | 2023-0278916 A1 | 07 September 2023 |

Form PCT/ISA/210 (patent family annex) (July 2022)

15

**EP 4 778 896 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020200014266